# EUROPÄISCHE PATENTSCHRIFT

(11) **EP 1 203 933 B1**
(45) Veröffentlichungstag und Bekanntmachung des Hinweises auf die Patenterteilung: **21.04.2010**
(21) Anmeldenummer: 01124085.0
(22) Anmeldetag: 10.10.2001
(51) Int. Cl.: G01D 18/00

(54) **Sensoranordnung zur Erfassung wenigstens eines Messwerts**
Sensor device for measuring at least one variable
Dispositif capteur pour la mesure d'au moins une grandeur

(30) Priorität: 02.11.2000 DE 10054288
(43) Veröffentlichungstag der Anmeldung: 08.05.2002
(60) Teilanmeldung: 05014403.9
(73) Patentinhaber: FESTO AG & Co. KG, 73734 Esslingen (DE)
(72) Erfinder: Wagner, Dietmar, 73230 Kirchheim (DE); Medow, Ralf, 73728 Esslingen (DE)
(74) Vertreter: Vetter, Hans

(56) Entgegenhaltungen:
- WO-A-98/22781
- DE-A- 4 022 697
- US-A- 4 845 649

## Beschreibung

Die Erfindung betrifft eine Sensoranordnung zur Erfassung wenigstens eines Messwerts mit den Merkmalen des Oberbegriffs des Anspruchs 1.

Es besteht häufig der Wunsch, die Sensoreigenschaften derartiger Sensoranordnungen auch noch nach dem Einbau am Einsatzort einstellen oder verändern zu können, oder um die Sensoranordnung an sich geänderte Anforderungen anpassen zu können. Vor allem bei Sensoren mit sehr kleiner Bauform ist ein separater elektrischer Anschluss für eine derartige Parametrierung nicht möglich, und auch eine kabellose Verbindung zu einer Parametrierelektronik über Funk, Infrarot oder dergleichen scheidet aus Platz- und Kostengründen aus.

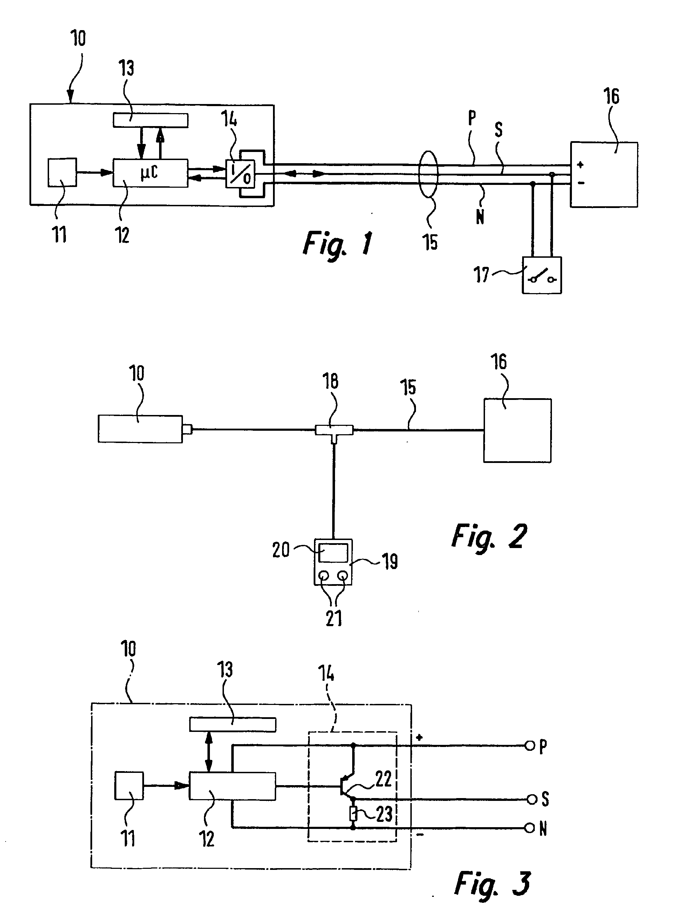

Aus der WO 98/22781 A ist eine Sensoranordnung mit den Merkmalen des Oberbegriffs des Anspruchs 1 bekannt, das jedoch ein sehr aufwendiges Justierverfahren und eine sehr aufwendige Hardware benötigt, wie sie dort beispielsweise in den Figuren 1 und 3 dargestellt und beschrieben ist. Dennoch sind die Möglichkeiten der Parametrierung sehr begrenzt und wenig komfortabel.

Der Erfindung liegt daher die Aufgabe zugrunde, eine einfachere und kostengünstigere Justiereinrichtung bzw. Parametriereinrichtung für eine Sensoreinrichtung zu schaffen, die eine vielseitigere und komfortablere Parametrierung ermöglicht.

Diese Aufgabe wird erfindungsgemäß durch eine Sensoranordnung mit den Merkmalen des Anspruchs 1 gelöst.

In vorteilhafter Weise wird die ohnehin vorhandene wenigstens eine Sensorsignalleitung auch zur Parametrierung verwendet, so dass keine zusätzlichen Anschlussleitungen oder drahtlose Datenübertragungsmittel erforderlich sind. Die externe Parametriereinrichtung kann bei Bedarf an die wenigstens eine Sensorsignalleitung angeschlossen werden und Parametriersignale übertragen, wobei dann daraus abgeleitete Parametrierwerte in der Sensoranordnung gespeichert werden. Auch eine Veränderung der Sensoreigenschaften kann dadurch noch leicht nachträglich durchgeführt werden. Die erfindungsgemäße vielseitigere und komfortablere Parametrierung, also beispielsweise eine Parametrierung zur Einstellung von Schaltpunkten, Sensor- und/oder Schaltcharakteristiken, Schaltzeiten, Sensoransprechschwellen, Hysteresen, Fensterfunktionen und dergleichen erfolgt in einfacher und kostengünstiger Weise durch ein in beiden Richtungen wechselnd ablaufendes Parametrier-protokoll, das beispielsweise in Form von digitalen Signalfolgen vorliegt, und das den Sensorsignalen überlagert werden kann. Hierdurch kann die Sensorelektronik insbesondere im Vergleich zum Stand der Technik sehr einfach ausgeführt werden.

Durch die in den Unteransprüchen aufgeführten Maßnahmen sind vorteilhafte Weiterbildungen und Verbesserungen der im Anspruch 1 angegebenen Sensoranordnung möglich.

Die Parametriereinrichtung wird in einer bevorzugten Ausführung mit einem Display und Bedienungselementen versehen, um auch aufwendigere Parametriereinstellungen vornehmen zu können.

Die Parametriereinrichtung ist vorzugsweise zur Übertragung von Parametriersignalen, wie die Einstellung von Schaltpunkten, Sensor- und/oder Schaltfunktionen, Sensor- und/oder Schaltcharakteristiken, Schaltzeiten, Sensoransprechschwellen, Hysteresen oder Fensterfunktionen, ausgebildet.

In einer bevorzugten Ausführung liegen die Sensorsignale digital in Form von wenigstens zwei unterschiedlichen Signalpegeln vor, wobei die Signalpegel der überlagerten Parametriersignale vorzugsweise derart kleiner als die Sensorsignalpegel sind, dass sie bei der Erkennung der Sensorsignalpegel unbeachtlich sind. Hierdurch wird erreicht, dass die Sensorsignalerkennung nicht durch die Parametriersignale beeinflusst wird.

Zur Parametrierung eignet sich bevorzugt ein festgelegtes, in beiden Richtungen wechselnd ablaufendes Parametrier-Protokoll. Dieses besitzt zweckmäßigerweise ein durch die Sensorelektronik überprüfbares Startbit, wobei Mittel zur Beibehaltung des augenblicklich anliegenden Sensorsignals während einer festlegbaren Erkennungszeit vorgesehen sind, um zu verhindern, dass während des Startbits eine Veränderung des Sensorsignalpegels erfolgt.

Die Sensorelektronik besitzt weiterhin vorteilhafterweise Mittel zur Beibehaltung des augenblicklich anliegenden Sensorsignals für eine vorgebbare Zeit während der Parametrierung, die größer als ein Sendezyklus des Parametrier-Protokolls ist. Hierdurch wird verhindert, dass ein Sendezyklus durch einen Signalwechsel des Sensorsignals in unerwünschter Weise beeinflusst wird.

In einer einfachen Ausführung der Parametriereinrichtung ist diese als Teach-in- oder Kurzschlussschalter ausgebildet.

Ausführungsbeispiele der Erfindung sind in der Zeichnung dargestellt und in der nachfolgenden Beschreibung näher erläutert. Es zeigen:
- Fig. 1: eine schematische Darstellung einer an ein elektrisches Gerät angeschlossenen Sensoranordnung mit einem Kurzschlussschalter zur Teach-in-Parametrierung,
- Fig. 2: die mit dem elektrischen Gerät über eine Leitungsanordnung verbundene Sensoranordnung mit einem an diese Leitungsanordnung angeschlossenen Parametriergerät und
- Fig. 3: eine schaltungsmäßige Ausgestaltung des Eingangs/Ausgangsports der Sensoranordnung.

Gemäß Fig. 1 enthält eine Sensoranordnung 10 ein Sensorelement 11, das beispielsweise als Hall-Element, Feldplatte, fotosensitives Element, Piezoelement, temperatursensitives Element, drucksensitives Element, Kraftaufnehmer oder dergleichen ausgebildet ist.

Dieses Sensorelement ist an eine im Ausführungsbeispiel als Mikrocomputer ausgebildete Sensorelektronik 12 angeschlossen, die ihrerseits mit einer Speicheranordnung 13 und einem Eingangs/Ausgangsport 14 verbunden ist. Dieser ist über eine aus drei Leitungen P, S, N bestehende Leitungsanordnung 15, die das Sensoranschlusskabel darstellt, mit einem elektrischen oder elektronischen Gerät 16 verbunden, dem die Sensorsignale zu Steuer-, Regel- und/oder Anzeigezwecken zugeführt werden. Die Leitungsanordnung 15 besteht aus zwei Spannungsversorgungsleitungen PN sowie einer Sensorsignalleitung S, wobei auch eine größere Zahl von Sensorsignalleitungen vorgesehen sein kann. Die beiden Spannungsversorgungsleitungen PN dienen zur Spannungsversorgung des Eingangs/Ausgangsports 14 sowie der übrigen elektronischen Komponenten der Sensoranordnung 10. Die Sensorsignalleitung S ist über einen Kurzschlussschalter 17 bzw. -taster mit der Spannungsversorgungsleitung N verbunden, beispielsweise lösbar verbunden.

Im Normalbetrieb werden die im Sensorelement 11 erzeugten Sensorsignale in der Sensorelektronik 12 aufgearbeitet und über den Eingangs/Ausgangsport 14 dem elektrischen Gerät 16 übermittelt. Dabei kann in der Speicheranordnung 13 auch ein Schaltgrenzwert für den jeweils erfassten Meßwert gespeichert sein, wobei die Sensoranordnung 10 oberhalb dieses Schaltgrenzwerts ausgangsseitig ein High-Signal erzeugt, während darunter ein Low-Signal anliegt. Darüber hinaus kann mittels zweier Schaltgrenzwerte auch eine Schalthysterese vorgegeben werden.

Zur Speicherung einer oder mehrerer Schaltgrenzwerte in der Speicheranordnung 12 dient der als Teach-in-Schalter ausgebildete Kurzschlussschalter 17, der bei Bedarf an die Leitungsanordnung 15 anschließbar ist oder auch dort belassen werden kann. Soll der augenblicklich anliegende Meßwert als Schaltgrenzwert übernommen werden, so wird der Kurz-schlussschalter 17 betätigt. Das bei der Betätigung erfolgende Kurzschließen der Sensorsignalleitung S mit der Spannungsversorgungsleitung N wird durch die Sensorelektronik erfasst, und der entsprechende Meßwert wird in die Speicheranordnung 13 als Schaltgrenzwert übernommen. Entsprechend können auch zwei Meßwerte als Schaltgrenzwerte für ein Schalten mit Hysterese übernommen werden, beispielsweise durch zwei aufeinanderfolgende Betätigungen des Kurzschlussschalters 17.

Bei dem in Fig. 2 dargestellten zweiten Ausführungsbeispiel sind die Sensoranordnung 10 und das damit über die Leitungsanordnung 15 verbundene elektrische Gerät 16 entsprechend aufgebaut, jedoch vereinfacht dargestellt. Über eine Leitungsverzweigung 18 in der Leitungsanordnung 15 ist ein Parametriergerät 19 angeschlossen, das ein Display 20 und Bedienelemente 21 besitzt. Dieses Parametriergerät 19 kann an einer beliebigen Stelle der Leitungsanordnung 15 angeschlossen werden, zum Beispiel auch an den beiden Endbereichen.

Die Sensoranordnung 10 kann beispielsweise unparametriert am Einsatzort montiert werden. Die Parametrierung kann dann anschließend mittels des Parametriergeräts 19 durchgeführt werden. Weiterhin kann eine ursprünglich eingegebene oder durch das Parametriergerät 19 eingegebene Parametrierung nachträglich geändert werden. Der Ablauf der Parametrierung wird im folgenden anhand der Sensoranordnung 10 gemäß Fig. 3 beschrieben, bei der der Eingangs/Ausgangsport 14 durch einen Schalttransistor 22 realisiert ist, dessen Basis mit einem Ausgang der Sensorelektronik 12, dessen Emitter an die positive Spannungsversorgungsleitung P und dessen Kollektor über einen Widerstand 23 mit der negativen Spannungsversorgungsleitung N verbunden ist. Die Sensorsignalleitung S ist an den Kollektor dieses Schalttransistors 22 angeschlossen.

Durch den Schalttransistor 22 weist die Sensoranordnung 10 je nach physikalischer Eingangsgröße (Meßwert) zwei Zustände am mit der Sensorsignalleitung verbundenen Ausgang auf, nämlich zum einen ein Potential nahe Null durch den Widerstand 23 (Ausgang gesperrt) und zum anderen ein Potential unterhalb des Pluspotentials (z.B. 24V) über den durchgesteuerten Transistor (Ausgang geschaltet). Diese beiden Zustände werden im elektrischen Gerät 16 dahingehend interpretiert, dass sich der Meßwert unterhalb des Schaltgrenzwerts oder darüber befindet.

Das an die Leitungsanordnung 15 angeschlossene Parametriergerät 19 erkennt ebenfalls den Schaltzustand der Sensoranordnung 10 entsprechend. Die Parametrierung erfolgt nun durch Senden von Informationsbits an die Sensoranordnung 10. Dabei wird das Potential jeweils um einen Spannungswert von zum Beispiel 2 Volt angehoben. Dadurch ergeben sich vier mögliche Zustände auf der Sensorsignalleitung S:

| | | |
|---|---|---|
| Ausgang gesperrt. | Parametriersignal Low | 0 Volt |
| Ausgang gesperrt. | Parametriersignal High | 2 Volt |
| Ausgang geschaltet. | Parametriersignal Low | 22 Volt |
| Ausgang geschaltet. | Parametriersignal High | 24 Volt |

Die Spannungspegel und die Treiberpotentiale im Parametriergerät 19 und in der Sensoranordnung 10 sind so ausgelegt, dass in allen vier Zuständen die normale Funktion der Sensoranordnung 10 in Zusammenhang mit seiner angeschlossenen Last gewährleistet ist. Dies ist insbesondere bei digitalen SPS-Eingängen zu beachten. Hierbei wird im elektrischen Gerät 16 der Zustand "Aus" (Meßwert unter Schaltgrenzwert) bei Spannungen < 5 Volt und der Schaltzustand "Ein" (Meßwert über Schaltgrenzwert) bei Spannungen über 15 Volt erkannt. Die Parametrierbits haben somit keinen Einfluss auf die Erkennung des Schaltzustands der Sensoranordnung 10 bzw. des Schalttransistors 22.

Beim Senden der positiven Flanke des ersten Parametrierbits (Start der Parametrierung) behält die Sensoranordnung 10 ihren augenblicklichen Schaltzustand bei, friert ihn sozusagen ein. Bleibt das Signal des Parametrierbits für eine vorgegebene Zeit stabil im High-Zustand, so akzeptiert die Sensoranordnung den Parametrierstart, andernfalls arbeitet die Sensoranordnung 10 normal weiter. Die Kommunikation bei der Parametrierung kann mit einem festgelegten Protokoll in beide Richtungen erfolgen, wobei die Bit-Länge beispielsweise 0,5 ms und die Wort-Länge zum Beispiel 16 Bit betragen kann und der Ablauf genau festgelegt sein muss.

Das festgelegte Protokoll zur Parametrierung kann in Sendezyklen unterteilt sein, wobei der Sensor nach jedem Sendezyklus seinen Schaltzustand ändern kann. Die Länge eines solchen Zyklus muss festgelegt werden und beträgt beispielsweise 1 - 2 ms. Die einzelnen Bits der Übertragung können beispielsweise über den Spannungspegel bei gleicher Zeitbasis im Parametriergerät 19 und in der Sensoranordnung 10 codiert werden (UART) oder können durch die Impulslänge eines Parametrierimpulses festgelegt werden. Bei der zweiten Variante kann die Zeitbasis auch ungenauer sein, und nach jedem gesendeten Bit könnte eine Schaltzustandsänderung erfolgen.

Damit das Parametriergerät 19 für alle möglichen unterschiedlichen Sensoranordnungen verwendet werden kann, muss die Kommunikation für alle diese Sensoranordnungen einheitlich definiert werden. Im folgenden ist ein Kommunikationsablauf beispielhaft aufgeführt. Dabei wird das Parametriergerät 19 abgekürzt als PG und die Sensoranordnung abgekürzt als SA bezeichnet:
1. PG an SA Parametrierstart durch erstes Parametrierbit
2. SA an PG Sensor-Identifikation übertragen
3. PG an SA ersten eingestellten Parametrierwert anfragen
4. SA an PG ersten Parametrierwert mitteilen + übertragen
5. PG an SA zweiten eingestellten Parametrierwert anfragen
6. SA an PG zweiten Parametrierwert mitteilen + übertragen
7. PG an SA neue Parametrierung für ersten Parametrierwert übertragen (z. B. erster Schaltgrenzwert)
8. SA an PG Meßwert übertragen
9. PG an SA neue Parametrierung für zweiten Parametrierwert übertragen (z. B. zweiter Schaltgrenzwert)
10. SA an PG Meßwert übertragen

Die Parametrierung kann in vielfacher Weise erfolgen. Gemäß dem obigen Beispiel wurden Schaltgrenzwerte übertragen. Entsprechend kann eine Sensoranordnung auch dadurch parametriert werden, dass auf andere Schaltpunkte, Sensor- und/oder Schaltfunktionen, Sensor- und/oder Schaltcharakteristiken, Schaltzeiten, Sensoransprechschwellen, Hysteresen, Fensterfunktionen oder dergleichen übertragen werden. Dies hängt nicht zuletzt auch von der Art der jeweiligen Sensoranordnung ab, da Sensoranordnungen zur Messung unterschiedlicher Meßwerte auch unterschiedliche Einstellungen erforderlich machen.

Das vorstehend aufgeführte Kommunikations-Protokoll kann selbstverständlich sehr unterschiedlich ausgelegt werden, zum Beispiel können auch mehr oder weniger unterschiedliche Meßwerte angefragt werden. Es ist auch möglich, die Meßwertübertragung während der Parametrierung ganz einzustellen bzw. auf den jeweiligen Meßwert einzufrieren.

Das im Ausführungsbeispiel als separates Gerät ausgebildete Parametriergerät 19 kann beispielsweise auch im elektrischen Gerät 16 mitintegriert sein, beispielsweise in einem Eingangsmodul. Zur Unterstützung der Parametrierung können dann ein Display und Bedienelemente des elektrischen Geräts dienen. Das elektrische Gerät 16 kann mit einer höheren Befehlsebene oder über Internet vernetzt sein, so dass die Sensoranordnung 10 auch aus der Ferne parametriert werden kann. Bei einer Ausführung als separates Gerät kann das Parametriergerät 19 entfernt werden, um zur Parametrierung anderer Sensoren benutzt werden zu können.

In einer alternativen Ausgestaltung kann das Parametriergerät 19 auch in die Sensorsignalleitung S der Leitungsanordnung 15 geschaltet sein. Damit kann eine bidirektionale Kommunikation zwischen der Sensoranordnung 10 und dem Parametriergerät 19 unabhängig vom Schaltzustand der Sensoranordnung 10 und der Last erfolgen. Die Sensoranordnung 10 muss dabei nur die beiden Schaltzustände "Vaus" (Ausgang gesperrt, Potential nahe 0) und "Vein" (Ausgang geschaltet, Potential unterhalb dem Plus-Potential über einen durchgesteuerten Transistor) einnehmen können. Die Parametrierung wird dann vom Parametriergerät 19 immer durch ein Plus-Potential eingeleitet. Die Sensoranordnung 10 kann dies im Schaltzustand Vaus durch die Spannungsänderung an seinem Ausgang erkennen. Im Schaltzustand Vein kann er über den Ausgangsstrom erfassen, ob ein externes Plus-Potential auf die Ausgangsleitung aufgeschaltet wurde. Die Erkennung des Ausgangsstroms erfolgt beispielsweise über einen externen Shunt. Es können somit drei Bereiche für den Laststrom am Shunt unterschieden werden:
1. Überlast (Strom größer als z.B. 100 mA,
2. Normalbetrieb bzw. Ausgang geschaltet (Strom zwischen z.B. 4 und 100 mA) und
3. Hochohmige Last oder Parametrierung (Strom unter 4 mA).

Da somit von der Sensoranordnung 10 auf diese Weise die Einleitung des Parametriervorgangs erkannt wurde, beginnt der Datenaustausch mit dem Parametriergerät 19 über die Ausgangsleitung unter Verwendung der beiden Schaltzustände (Vaus, Vein). Ist die Sensoranordnung 10 auf Empfang, ist der Schaltzustand immer 0-Potential (Vaus). Das Parametriergerät 19 gibt den innerhalb der digitalen Kommunikation ermittelten Schaltzustand an die Last weiter (z.B. 12 Bit Wortlänge, 300 baud). Damit ist eine Schaltzustandsänderung alle 40 ms möglich.

Die Erfindung ist nicht auf Sensoranordnungen mit digitalen Ausgangssignalen beschränkt, sondern kann auch für Sensoranordnungen mit analogen Ausgangssignalen eingesetzt werden. Die Übertragung der Parametriersignale kann beispielsweise durch Modulation dieser Analogsignale erfolgen, oder aber sie werden während der Parametrierung abgeschaltet oder unterdrückt.

## Patentansprüche

1. Sensoranordnung zur Erfassung wenigstens eines Messwerts, mit wenigstens einem sensitiven Element (11) das über eine eine Speicheranordnung (13) aufweisende Sensorelektronik (12) mit einem Eingangs/Ausgangsport (14) verbunden ist, einer wenigstens drei Leitungen aufweisenden Leitungsanordnung (15), durch die der Eingangs/Ausgangsport (14) mit einem externen elektrischen oder elektronischen Gerät (16) verbindbar ist, wobei zwei Leitungen als Spannungsversorgungsleitungen (P, N) und wenigstens eine dritte Leitung als Sensorsignalleitung (S) zur Übertragung von Sensorsignalen zum elektrischen oder elektronischen Gerät (16) ausgebildet ist, und mit einer externen, mit der wenigstens einen Sensorsignalleitung (S) verbindbaren Parametriereinrichtung (17; 19) zur Zuführung von Parametriersignalen zur Sensorelektronik (12), um die Sensoranordnung (10) durch Speicherung von Parametrierwerten zu parametrieren, **dadurch gekennzeichnet, dass** die Parametriereinrichtung (19) als Eingangsmodul im extern elektronischen Gerät (16) angeordnet oder als separates Parametriergerät ausgebildet ist, und dass zur Parametrierung ein festgelegtes, in beiden Richtungen wechselnd ablaufendes Parametrier-Protokoll vorgesehen ist.

2. Sensoranordnung nach Anspruch 1, **dadurch gekennzeichnet, dass** die Parametriereinrichtung (19) mit einem Display (20) und Bedienungselementen (21) versehen ist.

3. Sensoranordnung nach Anspruch 1 oder 2, **dadurch gekennzeichnet, dass** die Parametriereinrichtung (19) zur Übertragung von Parametriersignalen ausgebildet ist, insbesondere zur Einstellung von Schaltpunkten, Sensor- und/oder Schaltfunktionen, Sensor- und/oder Schaltcharakteristiken, Schaltzeiten, Sensoransprechschwellen, Hysteresen oder Fensterfunktionen.

4. Sensoranordnung nach einem der vorhergehenden Ansprüche, **dadurch gekennzeichnet, dass** die Sensorsignale digital in Form von wenigstens zwei unterschiedlichen Signalpegeln vorliegen.

5. Sensoranordnung nach einem der vorhergehenden Ansprüche, **dadurch gekennzeichnet, dass** die Parametriersignale als digitale Signalfolgen erzeugbar und den jeweils vorliegenden Sensorsignalen überlagerbar sind.

6. Sensoranordnung nach Anspruch 5, **dadurch gekennzeichnet, dass** die Signalpegel der überlagerten Parametriersignale derart kleiner als die Sensorsignalpegel sind, dass sie bei der Erkennung der Sensorsignalpegel unbeachtlich sind.

7. Sensoranordnung nach einem der vorhergehenden Ansprüche, **dadurch gekennzeichnet, dass** das Parametrier-Protokoll ein durch die Sensorelektronik (12) überprüfbares Startbit besitzt, wobei Mittel zur Beibehaltung des augenblicklich anliegenden Sensorsignals während einer festlegbaren Erkennungszeit vorgesehen sind.

8. Sensoranordnung nach Anspruch 1 oder 7, **dadurch gekennzeichnet, dass** die Sensorelektronik (12) Mittel zur Beibehaltung des augenblicklich anliegenden Sensorsignals für eine vorgebbare Zeit während der Parametrierung besitzt, die größer als ein Sendezyklus des Parametrier-Protokolls ist.

9. Sensoranordnung nach einem der vorhergehenden Ansprüche, **dadurch gekennzeichnet, dass** die Parametriereinrichtung (17) als Teach-in- oder Kurzschlussschalter ausgebildet ist.

10. Sensoranordnung nach einem der vorhergehenden Ansprüche, **dadurch gekennzeichnet, dass** die Parametriereinrichtung (17) zur Erzeugung eines Übernahmesignals ausgebildet ist, durch das der augenblicklich anliegende Messwert als wenigstens ein Schalt- oder Schwellwert in die Speicheranordnung (13) übernommen wird.

## Claims

1. Sensor unit for the detection of at least one measured value, with at least one sensitive element (11) which is connected to an input/output port (14) via sensor electronics (12) which have a memory unit (13), with a line arrangement (15) with at least three lines by means of which the input/output port (14) may be connected to an external electrical or electronics unit (16), wherein two lines are in the form of power supply lines (P, N) and at least a third line is in the form of a sensor signal line (S) for the transmission of sensor signals to the electrical or electronics unit (16), and with an external parameterisation device (17; 19) which may be connected to the sensor signal line or lines (S) to supply parameterisation signals to the sensor electronics (12) in order to parameterise the sensor unit (10) through the storage of parameterisation values, **characterised in that** the parameterisation device (19) is an input module in the external electronic device (16) or is in the form of a separate parameterisation device, and that a predefined parameterisation protocol running alternately in both directions is provided for parameterisation.

2. Sensor unit according to claim 1, **characterised in that** the parameterisation device (19) is provided with a display (20) and control elements (21).

3. Sensor unit according to claim 1 or 2, **characterised in that** the parameterisation device (19) is designed for the transmission of parameterisation signals, in particular for the setting of switching points, sensor and/or switching functions, sensor and/or switching characteristics, switching times, sensor response thresholds, hysteresis or window functions.

4. Sensor unit according to any of the preceding claims, **characterised in that** the sensor signals exist digitally in the form of at least two different signal levels.

5. Sensor unit according to any of the preceding claims, **characterised in that** the parameterisation signals may be generated as digital signal sequences and may be superimposed on the currently present sensor signals.

6. Sensor unit according to claim 5, **characterised in that** the signal levels of the superimposed parameterisation signals are sufficiently lower than the sensor signals levels that they are insignificant in connection with recognition of the sensor signal levels.

7. Sensor unit according to any of the preceding claims, **characterised in that** the parameterisation protocol has a start bit which may be checked by the sensor electronics (12), wherein means are provided for retention of the momentarily present sensor signals for a recognition time which may be specified.

8. Sensor unit according to claim 1 or 7, **characterised in that** the sensor electronics (12) have means for retention of the momentarily present sensor signals for a presettable time during parameterisation which is greater than a transmission cycle of the parameterisation protocol.

9. Sensor unit according to any of the preceding claims, **characterised in that** the parameterisation device (17) is in the form of a teach-in or short-circuit switch.

10. Sensor unit according to any of the preceding claims, **characterised in that** the parameterisation device (17) is designed to generate a takeover signal, by means of which the momentarily present measured value is taken into the memory unit (13) as at least a switching or threshold value.

## Revendications

1. Dispositif à capteurs servant à détecter au moins une grandeur de mesure, avec au moins un élément sensible (11), lequel est relié via un équipement électronique des capteurs (12) présentant un dispositif de mémoire (13) à un port d'entrée/sortie (14), avec un agencement de lignes (15) présentant au moins trois lignes grâce auxquelles le port d'entrée/sortie (14) peut être connecté à un appareil électrique ou électronique externe (16), deux lignes étant réalisées en tant que lignes d'alimentation en tension (P, N) et au moins une troisième ligne étant réalisée en tant que ligne de transmission de signaux de détection (S) pour la transmission des signaux de détection à l'appareil électrique ou électronique (16), et avec un dispositif de paramétrage externe (17 ; 19) pouvant être relié à cette ligne de transmission de signaux de détection (S), au moins au nombre de une, pour l'acheminement des signaux de paramétrage à l'équipement électronique des capteurs (12), afin de paramétrer le dispositif à capteurs (10) en mettant en mémoire des valeurs de paramétrage à paramétrer, **caractérisé en ce que** le dispositif de paramétrage (19) est disposé en tant que module d'entrée dans l'appareil électronique externe (16) ou bien est réalisé en tant qu'appareil de paramétrage distinct, et **en ce qu'**un protocole de paramétrage prédéterminé pouvant se dérouler en alternance dans les deux directions est prévu pour le paramétrage.

2. Dispositif à capteurs selon la revendication 1, **caractérisé en ce que** le dispositif de paramétrage (19) est muni d'un afficheur (20) et d'éléments d'exploitation (21).

3. Dispositif à capteurs selon la revendication 1 ou 2, **caractérisé en ce que** le dispositif de paramétrage (19) est réalisé pour la transmission de signaux de paramétrage, en particulier pour le réglage de points de contact de commutation, de fonctions de détection et/ou de commutation, de caractéristiques de détection et/ou de commutation, de temps de commutation, de seuils de déclenchements de capteurs, d'hystérèses ou de fonctions fenêtre.

4. Dispositif à capteurs selon l'une quelconque des revendications précédentes, **caractérisé en ce que** les signaux de détection se présentent de manière numérique sous forme d'au moins deux niveaux de signaux différents.

5. Dispositif à capteurs selon l'une quelconque des revendications précédentes, **caractérisé en ce que** les signaux de paramétrage peuvent être générés en tant que séquences de signaux numériques et peuvent se superposer aux signaux de détection respectivement présents.

6. Dispositif à capteurs selon la revendication 5, **caractérisé en ce que** les niveaux de signaux des signaux de paramétrage superposés sont plus faibles que les niveaux des signaux de détection de manière à passer inaperçus lors de la reconnaissance des niveaux des signaux de détection.

7. Dispositif à capteurs selon l'une quelconque des revendications précédentes, **caractérisé en ce que** le protocole de paramétrage possède un bit de départ vérifiable par l'équipement électronique des capteurs(12), des moyens étant prévus pour conserver le signal de détection actuellement appliqué pendant un temps de reconnaissance pouvant être prédéterminé.

8. Dispositif à capteurs selon la revendication 1 ou 7, **caractérisé en ce que** l'équipement électronique des capteurs (12) possède des moyens pour conserver le signal de détection actuellement appliqué pendant une durée prédéterminée au cours du paramétrage, laquelle durée est plus longue qu'un cycle d'envoi du protocole de paramétrage.

9. Dispositif à capteurs selon l'une quelconque des revendications précédentes, **caractérisé en ce que** le dispositif de paramétrage (17) est réalisé en tant qu'interrupteur à fonction teach-in ou disjoncteur.

10. Dispositif à capteurs selon l'une quelconque des revendications précédentes, **caractérisé en ce que** le dispositif de paramétrage (17) est réalisé pour la génération d'un signal de prise, grâce auquel la grandeur de mesure actuellement en vigueur est reprise en tant qu'au moins une valeur de commutation ou de seuil dans le dispositif de mémoire (13).
